# EUROPEAN PATENT APPLICATION

(11) **EP 3 892 930 A1**
(43) Date of publication of application: **13.10.2021**
(21) Application number: 19891982.1
(22) Date of filing: 03.12.2019
(51) Int. Cl.: F24F 11/50, G06Q 50/10, H04Q 9/00

(54) **APPARATUS MANAGEMENT SYSTEM**

(30) Priority: 03.12.2018 JP 2018226254
(71) Applicant: DAIKIN INDUSTRIES, LTD., Osaka-shi, Osaka 530-8323 (JP)
(72) Inventor: NOHARA, Kenta, Osaka-shi, Osaka 530-8323 (JP); NAGAHARA, Kenichi, Osaka-shi, Osaka 530-8323 (JP)
(74) Representative: Global IP Europe Patentanwaltskanzlei
(86) International application number: PCT/JP2019/047158
(87) International publication number: WO 2020/116424

(57) **Abstract**

Provided is a device management system capable of suppressing the occurrence of wrong setting of setting information of a device installed in a client property. A device management system (100) manages one or more devices (20) installed in a property (10). The device management system (100) includes an information terminal (30) that stores first setting information of the one or more devices (20), and an acquisition apparatus (40) that acquires second setting information of the one or more devices (20) from the one or more devices (20). The information terminal (30) includes a communication unit (31) that communicates with the acquisition apparatus (40) via a non-public line (60). The information terminal (30) or the acquisition apparatus (40) compares the first setting information stored in the information terminal (30) with the second setting information acquired by the acquisition apparatus (40).

## Description

### TECHNICAL FIELD

A device management system for managing a device installed in a property

### BACKGROUND ART

Hitherto, as disclosed in PTL 1 (Japanese Unexamined Patent Application Publication No. 2006-129004), there has been known a system that compares device setting information acquired from a device installed in a client property with device setting information registered in advance in a server or the like.

### SUMMARY OF INVENTION

### Technical Problem

There is an issue that, in a case where Internet installation has not been completed in a client property when a device has been installed in the client property, it is not possible to acquire device setting information registered in advance in a server or the like and it is not possible to execute a process of comparison with device setting information acquired from the device.

### Solution to Problem

A device management system according to a first aspect manages one or more devices installed in a property. The device management system includes an information terminal that stores first setting information of the one or more devices, and an acquisition apparatus that acquires second setting information of the one or more devices from the one or more devices. The information terminal includes a communication unit that communicates with the acquisition apparatus via a non-public line. The information terminal or the acquisition apparatus compares the first setting information stored in the information terminal with the second setting information acquired by the acquisition apparatus.

A device management system according to a second aspect is the device management system according to the first aspect, in which the communication unit communicates with the acquisition apparatus via the non-public line and acquires the second setting information acquired by the acquisition apparatus. The information terminal further includes a comparison unit that compares the first setting information stored in the information terminal with the second setting information acquired by the communication unit.

A device management system according to a third aspect is the device management system according to the first aspect, in which the communication unit communicates with the acquisition apparatus via the non-public line and transmits the first setting information stored in the information terminal to the acquisition apparatus. The acquisition apparatus compares the first setting information received from the information terminal via the non-public line with the second setting information acquired from the one or more devices. The acquisition apparatus transmits a result of comparison between the first setting information and the second setting information to the information terminal via the non-public line.

A device management system according to a fourth aspect is the device management system according to any one of the first to third aspects, in which the device management system further includes a management apparatus. The management apparatus is installed outside the property and is connected to the acquisition apparatus via a public line during operation of the one or more devices.

A device management system according to a fifth aspect is the device management system according to the fourth aspect, in which the management apparatus stores the first setting information. The information terminal further includes an acquisition unit that acquires the first setting information from the management apparatus via the public line.

A device management system according to a sixth aspect is the device management system according to any one of the first to fourth aspects, in which the information terminal further includes an acquisition unit that acquires the first setting information from a storage medium that stores the first setting information.

A device management system according to a seventh aspect is the device management system according to any one of the first to sixth aspects, in which the information terminal further includes a change unit that changes at least one of the first setting information and the second setting information, based on a result of comparison between the first setting information and the second setting information, in a case where the first setting information is different from the second setting information.

A device management system according to an eighth aspect is the device management system according to any one of the first to seventh aspects, in which the first setting information and the second setting information each include at least address information of the one or more devices.

A device management system according to a ninth aspect is the device management system according to any one of the first to eighth aspects, in which the non-public line is near field wireless communication, a local area network, Wi-Fi (registered trademark), or Bluetooth (registered trademark).

A device management system according to a tenth aspect is the device management system according to any one of the first to ninth aspects, in which the one or more devices include at least one of an air conditioner, a ventilator, a humidity controller, and a refrigerator.

A device management system according to an eleventh aspect is the device management system according to any one of the first to tenth aspects, in which the information terminal further includes a presentation unit that presents a result of comparison between the first setting information and the second setting information.

A device management system according to a twelfth aspect is the device management system according to the eleventh aspect, in which the presentation unit presents, for each of the one or more devices, information about a difference between the first setting information and the second setting information.

### BRIEF DESCRIPTION OF DRAWINGS

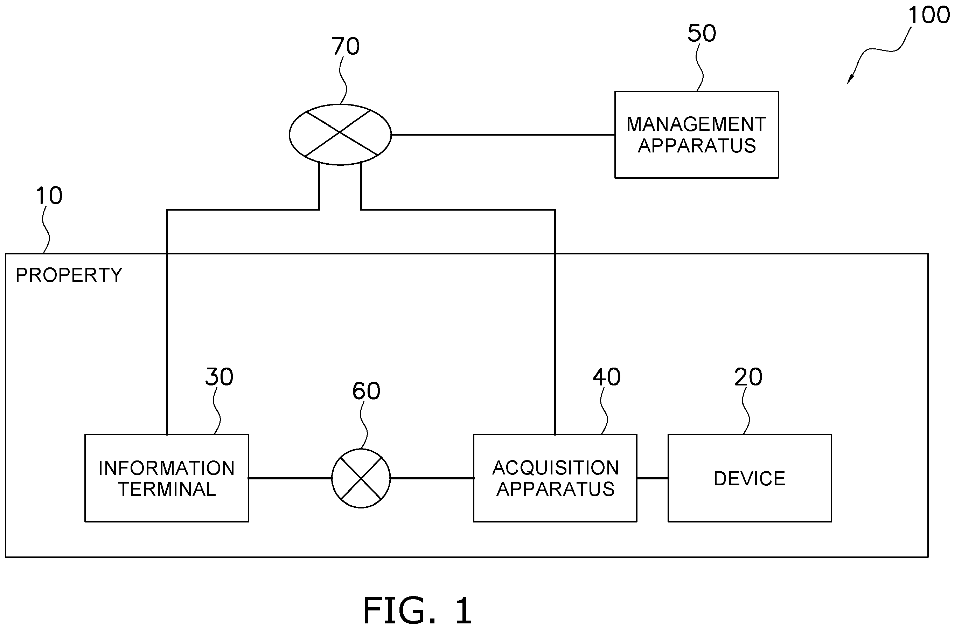

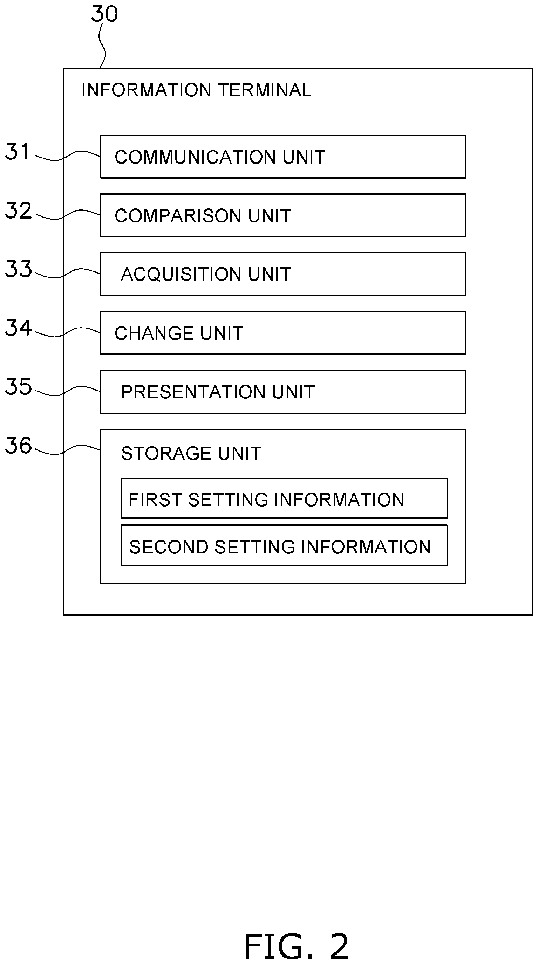

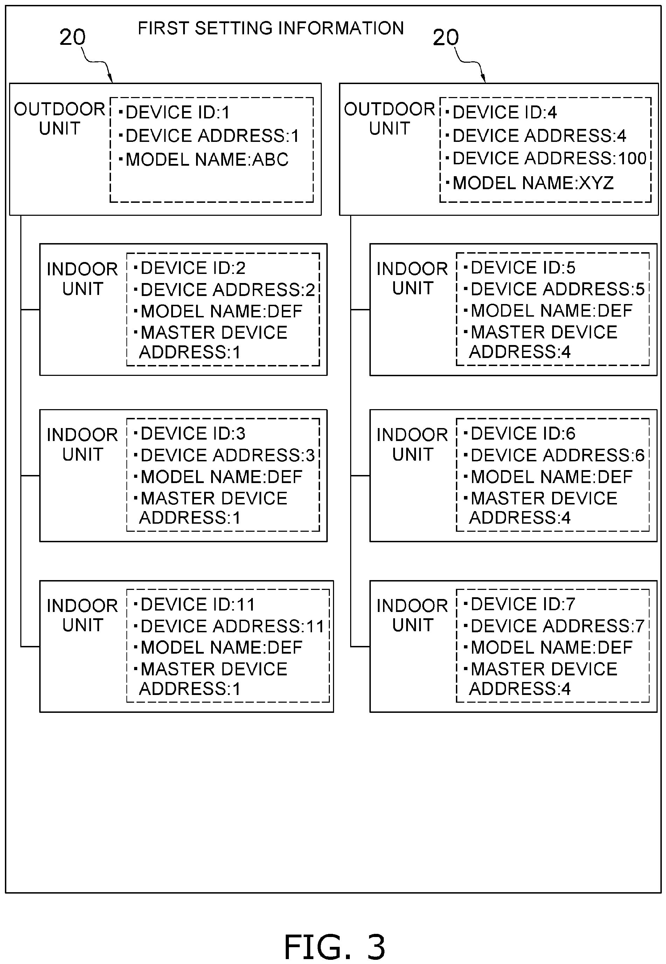

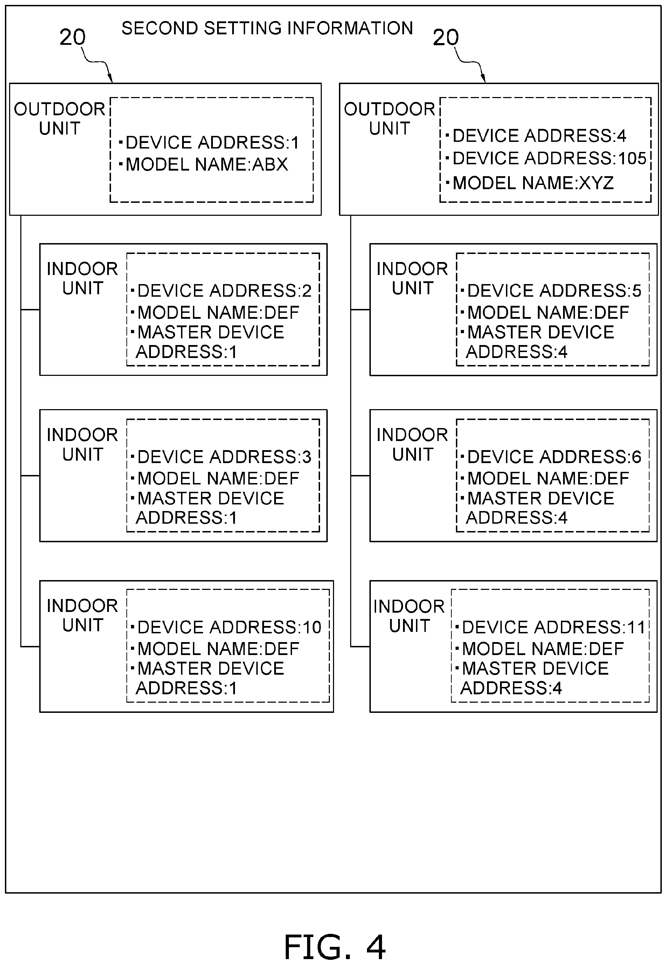

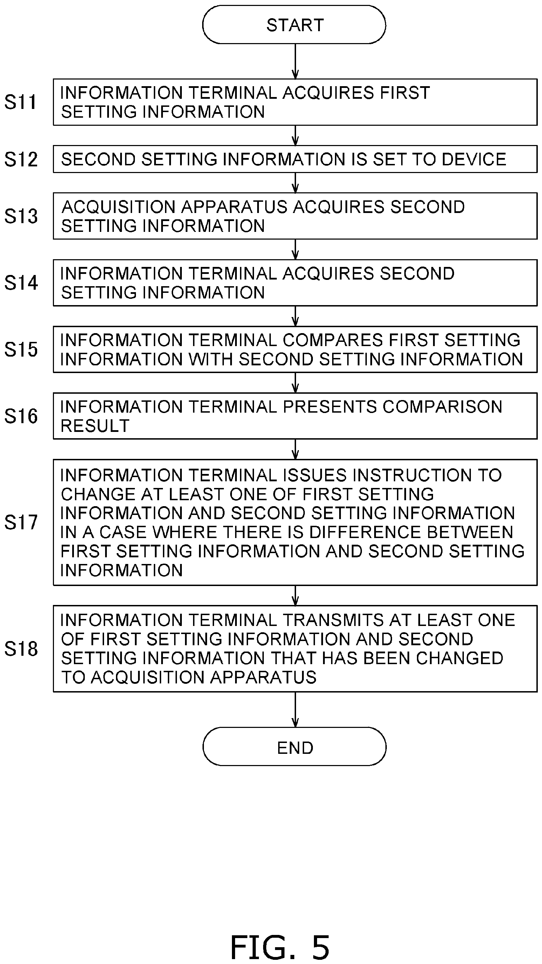

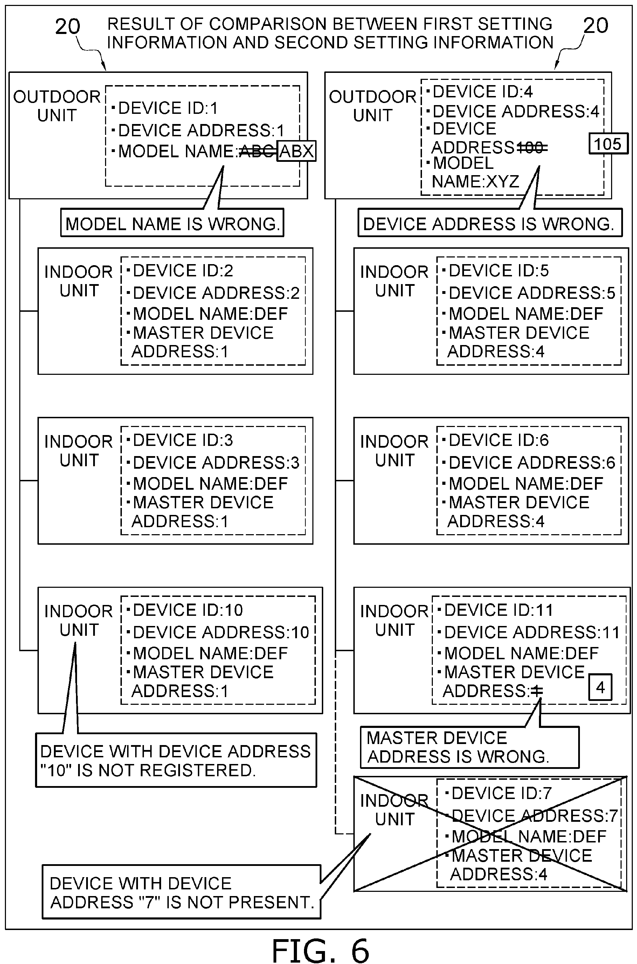

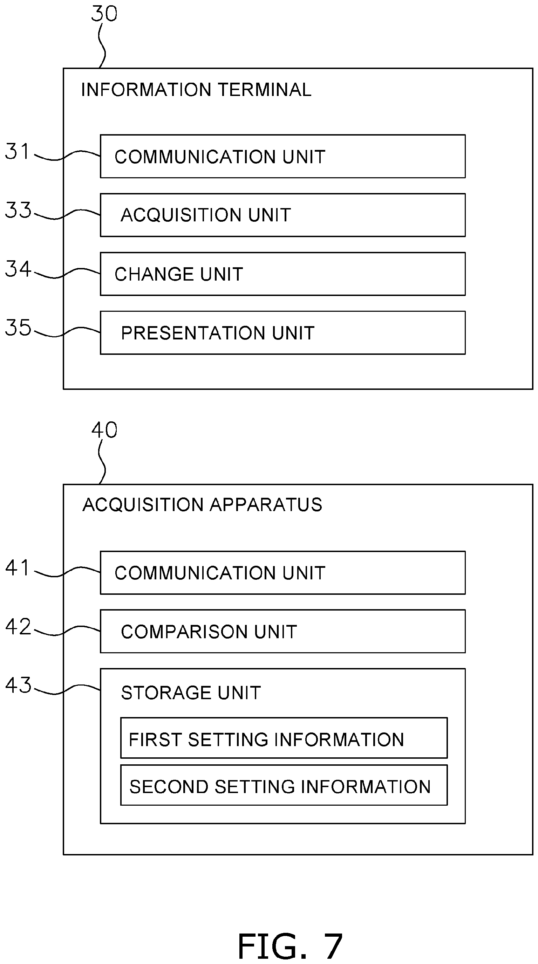

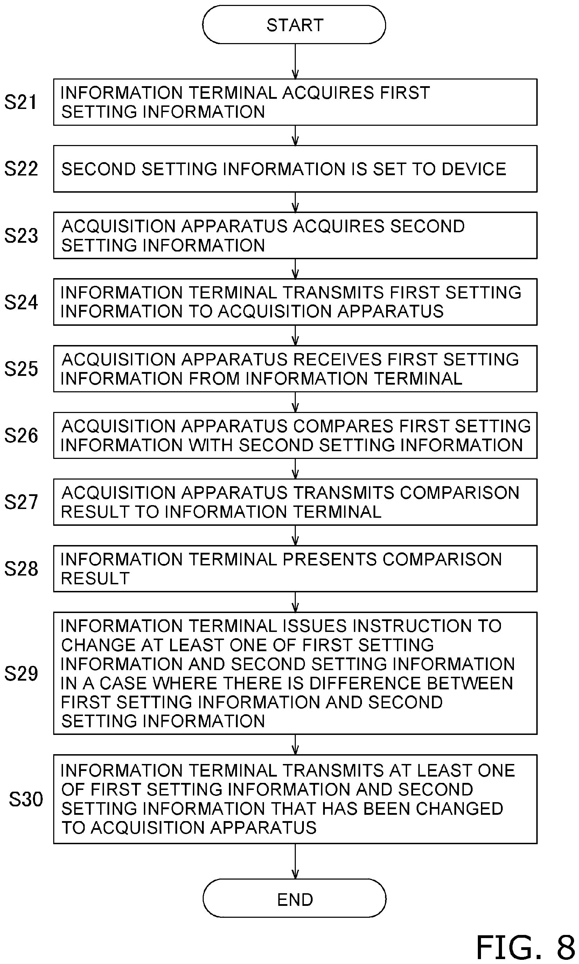

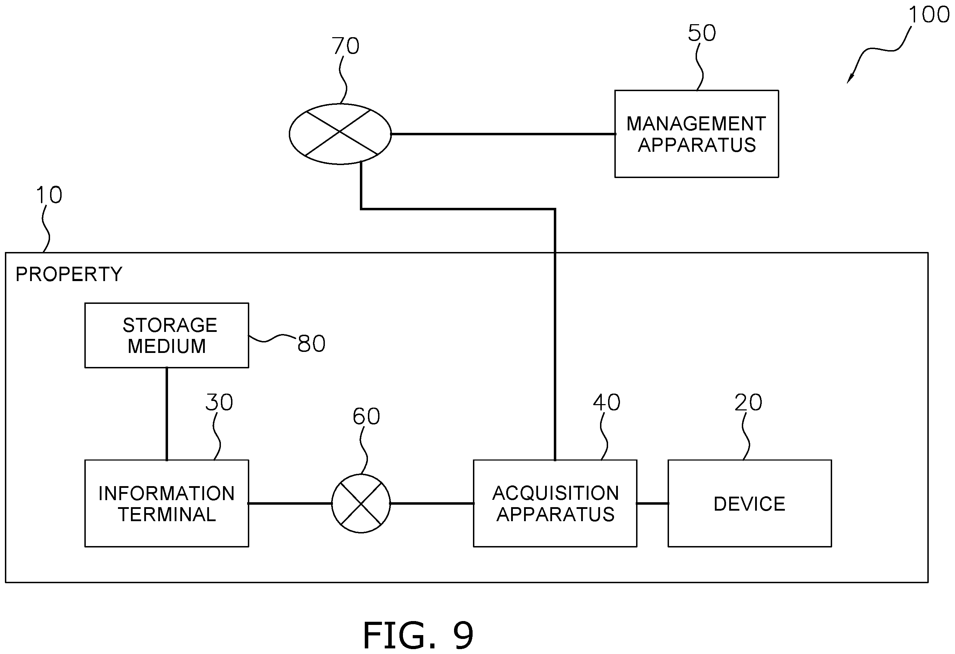

<Fig. 1> Fig. 1 is a configuration diagram of a device management system 100 according to a first embodiment.
<Fig. 2> Fig. 2 is a block diagram of an information terminal 30 according to the first embodiment.
<Fig. 3> Fig. 3 illustrates an example of first setting information according to the first embodiment.
<Fig. 4> Fig. 4 illustrates an example of second setting information according to the first embodiment.
<Fig. 5> Fig. 5 is a flowchart of a test run check operation of a device 20 according to the first embodiment.
<Fig. 6> Fig. 6 illustrates an example of a result of comparison between first setting information and second setting information according to the first embodiment.
<Fig. 7> Fig. 7 is a block diagram of an information terminal 30 according to a second embodiment.
<Fig. 8> Fig. 8 is a flowchart of a test run check operation of a device 20 according to the second embodiment.
<Fig. 9> Fig. 9 is a configuration diagram of a device management system 100 according to modification example A.

### DESCRIPTION OF EMBODIMENTS

### First Embodiment

### (1) Overall Configuration

A device management system 100 according to a first embodiment will be described with reference to the drawings. The device management system 100 is a system for managing one or more devices 20 installed in a property 10. In a case where a plurality of properties 10 each have one or more devices 20 installed therein, the devices 20 are managed in units of properties 10. In the present embodiment, a person in charge who manages one or more devices 20 performs a test run check operation in the property 10 having the one or more devices 20 installed therein. In the test run check operation, an operation of checking information set to the one or more devices 20 is performed, as will be described below.

Hereinafter, a description will be given of a case where the device management system 100 manages one or more devices 20 installed in a certain property 10. Fig. 1 is a configuration diagram of the device management system 100. Fig. 1 illustrates only one property 10 having a device 20 installed therein. As illustrated in Fig. 1, the device management system 100 is constituted mainly by the device 20, an information terminal 30, an acquisition apparatus 40, a management apparatus 50, a non-public line 60, and a public line 70. The device 20, the acquisition apparatus 40, and the non-public line 60 are installed inside the property 10. The management apparatus 50 and the public line 70 are installed outside the property 10.

The device 20 and the acquisition apparatus 40 installed in the property 10 are capable of communicating with each other. In the property 10, the information terminal 30 is capable of communicating with the acquisition apparatus 40 via the non-public line 60. The management apparatus 50 is capable of communicating with the information terminal 30 and the acquisition apparatus 40 via the public line 70.

Next, the individual elements of the device management system 100 will be described.

### (1-1) Device

In the present embodiment, the device 20 is an air conditioner. In this case, the device 20 is constituted mainly by one outdoor unit, a plurality of (for example, two to four) indoor units, and refrigerant pipes that connect the outdoor unit and the indoor units to each other.

### (1-2) Information Terminal

The information terminal 30 is a portable mobile terminal. The information terminal 30 is, for example, a smartphone or a tablet. A person in charge who manages the device 20 performs a test run check operation of the device 20 in the property 10 by using the information terminal 30.

In the test run check operation of the device 20, the person in charge who manages the device 20 performs an operation of comparing first setting information with second setting information by using the information terminal 30. The first setting information and the second setting information are each device setting information. The device setting information is information used to manage the device 20 in the property 10. The device setting information includes at least address information of the device 20. In a case where the device 20 is constituted by a plurality of devices, such as an air conditioner including an outdoor unit and an indoor unit, the device setting information includes at least pieces of address information of the respective devices. The details of the device setting information will be described below.

The first setting information is setting information registered in the device management system 100 and is setting information stored in an apparatus outside the device 20 (management apparatus 50). The first setting information is setting information predetermined as information to be set to the device 20 before the device 20 is installed in the property 10. The second setting information is setting information stored in the device 20. The second setting information is setting information set to the device 20.

### (1-3) Acquisition Apparatus

The acquisition apparatus 40 is connected to the device 20 via a line, a connection cable, or the like installed in the property 10. The acquisition apparatus 40 is connected to the information terminal 30 via the non-public line 60 and is connected to the management apparatus 50 via the public line 70. The acquisition apparatus 40 is capable of acquiring the second setting information set to the device 20 by communicating with the device 20. The acquisition apparatus 40 stores the second setting information acquired from the device 20.

### (1-4) Management Apparatus

The management apparatus 50 is installed in a management center or the like outside the property 10. The management apparatus 50 is connected to the information terminal 30 and the acquisition apparatus 40 via the public line 70. The management apparatus 50 stores the first setting information. The first setting information is, for example, registered in advance in the management apparatus 50 by a service engineer or the like of the management center.

The management apparatus 50 is connected to the acquisition apparatus 40 via the public line 70. Accordingly, when the device 20 is operating, the management apparatus 50 communicates with the device 20 via the acquisition apparatus 40, thereby being capable of remotely managing the device 20.

### (1-5) Non-Public Line

The non-public line 60 is a network line installed in the property 10. The non-public line 60 is a line available only to a person who has a predetermined access right mainly inside the property 10. The non-public line 60 is, for example, near field wireless communication using infrared rays or the like, local area network (LAN), Wi-Fi (registered trademark), or Bluetooth (registered trademark). The non-public line 60 may be a virtual private network (VPN) that is available via the Internet.

### (1-6) Public Line

The public line 70 is, for example, the Internet.

### (2) Detailed Configuration

Fig. 2 is a block diagram of the information terminal 30. As illustrated in Fig. 2, the information terminal 30 mainly includes a communication unit 31, a comparison unit 32, an acquisition unit 33, a change unit 34, a presentation unit 35, and a storage unit 36.

The communication unit 31 communicates with the acquisition apparatus 40 via the non-public line 60 and receives the second setting information acquired by the acquisition apparatus 40 from the device 20. The acquisition unit 33 communicates with the management apparatus 50 via the public line 70 and receives the first setting information registered in advance in the management apparatus 50. The storage unit 36 stores the first setting information received by the acquisition unit 33 and the second setting information received by the communication unit 31. The comparison unit 32 compares the first setting information and the second setting information stored in the storage unit 36 with each other. The presentation unit 35 presents a result of the comparison performed by the comparison unit 32. Specifically, the presentation unit 35 displays, for each device 20, information about a difference between the first setting information and the second setting information on the display of the information terminal 30. The change unit 34 provides a function of changing at least one of the first setting information and the second setting information in a case where the result of the comparison performed by the comparison unit 32 indicates that there is a difference between the first setting information and the second setting information. Specifically, the change unit 34 changes at least one of the first setting information and the second setting information on the basis of an input to the information terminal 30 by a person in charge.

In the device management system 100, a person in charge who performs a test run check operation of the device 20 is capable of, after installing the device 20 and the acquisition apparatus 40 in the property 10, automatically performing an operation of comparing the first setting information and the second setting information by using the information terminal 30. The information terminal 30 presents information about a difference between the first setting information and the second setting information on the basis of the result of the comparison between the first setting information and the second setting information. In a case where there is a difference between the first setting information and the second setting information, the person in charge is able to change at least one of the first setting information and the second setting information by using the information terminal 30.

Next, the details of the device setting information will be described. Fig. 3 illustrates an example of first setting information. Fig. 4 illustrates an example of second setting information. The first setting information illustrated in Fig. 3 and the second setting information illustrated in Fig. 4 are device setting information about the devices 20 installed in the same property 10. The property 10 has two devices 20 (air conditioners) installed therein. Each device 20 has a configuration in which one outdoor unit is connected to a plurality of indoor units by refrigerant pipes. Each device 20 belongs to an independent refrigerant system. Device setting information is individually set to the outdoor unit and each of the indoor units. The device setting information of the device 20 is constituted by the device setting information of the outdoor unit and the pieces of device setting information of the respective indoor units.

As illustrated in Fig. 3, the first setting information of each outdoor unit includes a device identifier (ID), a device address, and a model name, and the first setting information of each indoor unit includes a device ID, a device address, a model name, and a master device address. As illustrated in Fig. 4, the second setting information of each outdoor unit includes a device address and a model name, and the second setting information of each indoor unit includes a device address, a model name, and a master device address. The second setting information does not include a device ID.

A device ID is an ID for uniquely identifying an outdoor unit or an indoor unit. A device address is address information of an outdoor unit or an indoor unit in the property 10. In the property 10, an identical device address is not assigned to a plurality of devices (an outdoor unit and indoor units). A device address is used as a key at the time of comparing the first setting information with the second setting information. The device setting information may include a plurality of device addresses. A model name is a character string representing the type of outdoor unit or indoor unit. A master device address included in the device setting information of each indoor unit is the device address of the outdoor unit connected to the indoor unit by a refrigerant pipe. The plurality of indoor units having an identical master device address set thereto are connected to the same outdoor unit.

### (3) Operation

Next, a description will be given of an example of a test run check operation of the device 20 using the information terminal 30. Fig. 5 is a flowchart of a test run check operation of the device 20. Before start of the test run check operation, a service engineer or the like of the management center predetermines the first setting information of the device 20 and registers the first setting information in the management apparatus 50 in each property 10.

First, in step S11, the information terminal 30 acquires the first setting information of the device 20. For example, a person in charge performs a predetermined operation on the information terminal 30, and accordingly the information terminal 30 receives the first setting information from the management apparatus 50 via the public line 70.

Subsequently, in step S12, the person in charge sets second setting information to the device 20 when or after installing the device 20 in the property 10.

Subsequently, in step S13, the acquisition apparatus 40 acquires the second setting information of the device 20. For example, the acquisition apparatus 40 automatically recognizes the device 20 and automatically acquires the second setting information from the device 20, when being connected to the device 20.

Subsequently, in step S14, the information terminal 30 acquires the second setting information of the device 20. For example, the person in charge performs a predetermined operation on the information terminal 30, and accordingly the information terminal 30 receives the second setting information from the acquisition apparatus 40 via the non-public line 60.

Subsequently, in step S15, the information terminal 30 compares the first setting information with the second setting information. For example, the person in charge performs a predetermined operation on the information terminal 30, and accordingly the information terminal 30 compares the first setting information with the second setting information and extracts a difference between the first setting information and the second setting information.

Subsequently, in step S16, the information terminal 30 presents a comparison result. For example, the person in charge performs a predetermined operation on the information terminal 30, and accordingly the information terminal 30 displays, on the display, information about a difference between the first setting information and the second setting information.

Subsequently, in step S17, in a case where there is a difference between the first setting information and the second setting information, the information terminal 30 instructs the person in charge to change at least one of the first setting information and the second setting information. For example, the person in charge performs a predetermined operation on the information terminal 30, and thereby being able to make a change to match the first setting information to the second setting information or a change to match the second setting information to the first setting information. At this time, the person in charge may change both the first setting information and the second setting information as necessary.

Subsequently, in step S18, the information terminal 30 transmits the device setting information (at least one of the first setting information and the second setting information) changed in step S17 to the acquisition apparatus 40 as necessary. Furthermore, the information terminal 30 transmits to the acquisition apparatus 40 an instruction to change the device setting information set to the device 20 on the basis of the device setting information transmitted to the acquisition apparatus 40 as necessary. In a case where the result of the comparison operation in step S15 indicates that there is no difference between the first setting information and the second setting information, steps S17 to S18 are not performed.

The process of comparing the first setting information with the second setting information in step S15 in Fig. 5 is performed by using a device address included in the first setting information and the second setting information as a key. Next, a description will be given of a specific example of a comparison process based on the first setting information illustrated in Fig. 3 and the second setting information illustrated in Fig. 4. In this comparison process, in a case where there is a difference between the first setting information and the second setting information, a comparison result is generated under the assumption that the first setting information is wrong. Fig. 6 illustrates an example of a result of comparison between the first setting information and the second setting information. In Fig. 6, information about different points between the first setting information in Fig. 3 and the second setting information in Fig. 4 is added to the first setting information in Fig. 3, regarding the information other than the device IDs (device addresses, model names, and master device addresses).

In Fig. 3 and Fig. 4, the model name of the outdoor unit whose device address is 1 is different between the first setting information and the second setting information. In this case, as illustrated in Fig. 6, a comparison result indicating that the model name "ABC" included in the first setting information is wrong is presented, and the correct model name "ABX" is also presented.

In Fig. 3 and Fig. 4, the indoor unit whose device address is 10 is not registered in the first setting information but is registered in the second setting information. In this case, as illustrated in Fig. 6, a comparison result indicating that the indoor unit whose device address is 10 is not registered is presented.

In Fig. 3 and Fig. 4, the second device address of the outdoor unit whose device address is 4 is different between the first setting information and the second setting information. In this case, as illustrated in Fig. 6, a comparison result indicating that the second device address "100" included in the first setting information is wrong is presented, and the correct second device address "105" is also presented.

In Fig. 3 and Fig. 4, the master device address of the indoor unit whose device address is 11 is different between the first setting information and the second setting information. In this case, as illustrated in Fig. 6, a comparison result indicating that the master device address "1" included in the first setting information is wrong is presented, and the correct master device address "4" is also presented. In this case, as illustrated in Fig. 4, the correct master device address of the indoor unit whose device address is 11 is "4". Thus, in Fig. 6, the position of the indoor unit whose device address is 11 is changed so that the indoor unit whose device address is 11 is connected to the outdoor unit having the master device address "4".

In Fig. 3 and Fig. 4, the indoor unit whose device address is 7 is included in the first setting information but is not included in the second setting information. In this case, as illustrated in Fig. 6, a comparison result indicating that there is not the indoor unit whose device address is 7 included in the first setting information is presented.

### (4) Features

Hitherto, a person in charge who performs a test run check operation of a device installed in a client property has needed to compare device setting information determined in advance (first setting information) with device setting information actually set by the person in charge on site (second setting information). This is because, in a case where the first setting information is different from the second setting information, there is a possibility that the device operates in accordance with the first setting information. For example, in a case where a device that is not registered in the first setting information is installed in the property, there is a possibility that the device is regarded as not being present. In this case, however, when the person in charge compares the first setting information with the second setting information, the person in charge needs to check, on a device-by-device basis, whether the first setting information matches the second setting information, and there is an issue that time or effort is required in the test run check operation. In addition, there is an issue that, in a case where Internet installation has not been completed in the client property when the device has been installed in the client property, the person in charge is not able to acquire first setting information on site and is not able to perform a comparison process.

In the device management system 100 according to the present embodiment, a person in charge who performs a test run check operation of the device 20 installed in the property 10 is able to automatically compare the first setting information with the second setting information by using the information terminal 30. Thus, when performing the test run check operation, the person in charge does not need to visually check whether the first setting information matches the second setting information on a device-by-device basis.

In addition, the information terminal 30 is capable of directly receiving, via the public line 70 such as the Internet, the first setting information from the management apparatus 50 in which the first setting information is registered in advance. Thus, even in a case where Internet installation has not been completed in the property 10, the person in charge is able to acquire the first setting information by using the information terminal 30.

In addition, the information terminal 30 is capable of receiving the second setting information from the acquisition apparatus 40 connected to the device 20, via the non-public line 60 installed in the property 10. At this time, the acquisition apparatus 40 is capable of automatically recognizing the device 20 installed in the property 10 and automatically acquiring the second setting information from the device 20. Thus, the person in charge is able to automatically acquiring the second setting information by using the information terminal 30.

In addition, the information terminal 30 is capable of comparing the acquired first setting information and second setting information and presenting a comparison result to the person in charge in a visible manner as illustrated in Fig. 6. Thus, even in a case where the second setting information different from the first setting information is intentionally set on the basis of an installation status in the property 10 or in a case where the second setting information different from the first setting information is set due to a setting error caused by the person in charge, the person in charge is able to easily grasp an error, a missing portion, or the like of information included in the first setting information and the second setting information.

Thus, in the device management system 100, it is possible to omit an operation in which the person in charge checks, for each device 20, whether the first setting information matches the second setting information, and thus it is possible to reduce the time and cost required for a test run check operation. In addition, because the information terminal 30 automatically performs an operation of comparing the first setting information with the second setting information, the device management system 100 is capable of suppressing the occurrence of malfunction in which the device 20 having wrong device setting information set thereto operates.

### Second Embodiment

In the first embodiment, the information terminal 30 compares the first setting information acquired by the information terminal 30 with the second setting information received from the acquisition apparatus 40 via the non-public line 60. In the second embodiment, the acquisition apparatus 40 compares the first setting information with the second setting information, in stead of the information terminal 30. In the present embodiment, the acquisition apparatus 40 transmits a result of comparison between the first setting information and the second setting information to the information terminal 30.

Fig. 7 is a block diagram of the information terminal 30 and the acquisition apparatus 40 according to the present embodiment. As illustrated in Fig. 7, the information terminal 30 mainly includes a communication unit 31, an acquisition unit 33, a change unit 34, and a presentation unit 35. The communication unit 31 communicates with the acquisition apparatus 40 via the non-public line 60 and transmits the first setting information stored in the information terminal 30 to the acquisition apparatus 40. The acquisition unit 33, the change unit 34, and the presentation unit 35 are the same as those of the first embodiment.

The acquisition apparatus 40 includes a communication unit 41, a comparison unit 42, and a storage unit 43. The communication unit 41 receives the first setting information from the information terminal 30 via the non-public line 60. The storage unit 43 stores the first setting information received by the communication unit 41 and the second setting information acquired from the device 20. The comparison unit 42 compares the first setting information and the second setting information that are stored in the storage unit 43 with each other. The communication unit 41 transmits a result of comparison between the first setting information and the second setting information by the comparison unit 42 to the information terminal 30 via the non-public line 60. The communication unit 31 of the information terminal 30 receives the result of comparison from the acquisition apparatus 40 via the non-public line 60.

Next, a description will be given mainly of differences from the first embodiment, regarding an example of a test run check operation of the device 20 using the information terminal 30 and the acquisition apparatus 40. Fig. 8 is a flowchart of a test run check operation of the device 20 according to the present embodiment. The differences from the flowchart of the first embodiment illustrated in Fig. 5 are steps S24 to S27. Steps S21 to S23 and steps S28 to S30 in Fig. 8 are the same as steps S11 to S13 and steps S16 to S18 in Fig. 5, respectively.

First, in step S21, the information terminal 30 acquires the first setting information of the device 20.

Subsequently, in step S22, a person in charge sets second setting information to the device 20 when or after installing the device 20 in the property 10.

Subsequently, in step S23, the acquisition apparatus 40 acquires the second setting information of the device 20.

Subsequently, in step S24, the information terminal 30 transmits the first setting information to the acquisition apparatus 40. For example, the person in charge performs a predetermined operation on the information terminal 30, and accordingly the information terminal 30 transmits the first setting information to the acquisition apparatus 40 via the non-public line 60.

Subsequently, in step S25, the acquisition apparatus 40 receives the first setting information from the information terminal 30 via the non-public line 60.

Subsequently, in step S26, the acquisition apparatus 40 compares the first setting information with the second setting information. For example, the person in charge performs a predetermined operation on the information terminal 30, and accordingly the acquisition apparatus 40 compares the first setting information with the second setting information and extracts a difference between the first setting information and the second setting information.

Subsequently, in step S27, the acquisition apparatus 40 transmits a comparison result to the information terminal 30 via the non-public line 60.

Subsequently, in step S28, the information terminal 30 presents the comparison result.

Subsequently, in step S29, in a case where there is a difference between the first setting information and the second setting information, the information terminal 30 instructs the person in charge to change at least one of the first setting information and the second setting information.

Subsequently, in step S30, the information terminal 30 transmits the device setting information (at least one of the first setting information and the second setting information) changed in step S29 to the acquisition apparatus 40 as necessary. Furthermore, the information terminal 30 transmits to the acquisition apparatus 40 an instruction to change the device setting information set to the device 20 on the basis of the device setting information transmitted to the acquisition apparatus 40 as necessary. In a case where the result of the comparison operation in step S26 indicates that there is no difference between the first setting information and the second setting information, steps S29 to S30 are not performed.

### Modification Examples

### (1) Modification Example A

In the embodiments, the information terminal 30 acquires the first setting information from the management apparatus 50 via the public line 70. Alternatively, the information terminal 30 may acquire the first setting information from a storage medium that stores the first setting information instead of acquiring the first setting information from the management apparatus 50.

Fig. 9 is a configuration diagram of a device management system 100 according to the present modification example. In Fig. 9, the information terminal 30 acquires the first setting information from a storage medium 80. The storage medium 80 is a device capable of communicating with the information terminal 30 by being connected to the information terminal 30. The storage medium 80 may be, for example, a recording medium such as an optical disc or a universal serious bus (USB) memory stick, or may be a terminal such as a personal computer. In this case, in step S11 in Fig. 6, the person in charge performs a predetermined operation on the information terminal 30, and accordingly the information terminal 30 acquires the first setting information from the storage medium 80.

In the present modification example, the information terminal 30 does not acquire the first setting information from the management apparatus 50. However, as in the embodiments, the management apparatus 50 may communicate with the device 20 via the acquisition apparatus 40 to remotely manage the device 20.

In the present modification example, the device management system 100 need not necessarily include the management apparatus 50.

### (2) Modification Example B

In the embodiments, the device 20 is an air conditioner. The device 20 is not limited to an air conditioner, and may be any device that is installed in the property 10 and that requires initial setting. For example, the device 20 may be a ventilator, a humidity controller, or a refrigerator. Alternatively, the device 20 may be constituted by a plurality of types of devices selected from the group consisting of an air conditioner, a ventilator, a humidity controller, and a refrigerator.

### (3) Modification Example C

In the embodiments, in a case where there is a difference between the first setting information and the second setting information when the first setting information and the second setting information are compared with each other by the information terminal 30, the information terminal 30 assumes that the first setting information is wrong and generates a comparison result. Alternatively, in a case where there is a difference between the first setting information and the second setting information when the first setting information and the second setting information are compared with each other by the information terminal 30, the information terminal 30 may assume that the second setting information is wrong and may generate a comparison result. In this case, the information terminal 30 may assume, for each of information pieces included in the first setting information or the second setting information, that the first setting information is wrong or the second setting information is wrong.

### (4) Modification Example D

In the embodiments, in a case where there is a difference between the first setting information and the second setting information, the information terminal 30 instructs the person in charge to change at least one of the first setting information and the second setting information. Alternatively, in a case where there is a difference between the first setting information and the second setting information, the information terminal 30 may automatically change at least one of the first setting information and the second setting information. In this case, the information terminal 30 may notify the person in charge that at least one of the first setting information and the second setting information has been automatically changed and may notify the person in charge of the changed device setting information.

### Conclusion

The embodiments of the present disclosure have been described above. It is to be understood that the embodiments and the details can be variously changed without deviating from the gist and scope of the present disclosure described in the claims.

### Industrial Applicability

A device management system is capable of suppressing the occurrence of wrong setting of setting information of a device installed in a client property.

### REFERENCE SIGNS LIST

- 10: property
- 20: device
- 30: information terminal
- 31: communication unit
- 32: comparison unit
- 33: acquisition unit
- 34: change unit
- 35: presentation unit
- 40: acquisition apparatus
- 50: management apparatus
- 60: non-public line
- 70: public line
- 80: storage medium
- 100: device management system

### CITATION LIST

### PATENT LITERATURE

PTL 1: Japanese Unexamined Patent Application Publication No. 2006-129004

## Claims

1. A device management system (100) that manages one or more devices (20) installed in a property (10), comprising:
an information terminal (30) that stores first setting information of the one or more devices; and
an acquisition apparatus (40) that acquires second setting information of the one or more devices from the one or more devices, wherein
the information terminal includes a communication unit (31) that communicates with the acquisition apparatus via a non-public line (60), and
the information terminal or the acquisition apparatus compares the first setting information stored in the information terminal with the second setting information acquired by the acquisition apparatus.

2. The device management system (100) according to Claim 1, wherein
the communication unit communicates with the acquisition apparatus via the non-public line and acquires the second setting information acquired by the acquisition apparatus, and
the information terminal further includes a comparison unit (32) that compares the first setting information stored in the information terminal with the second setting information acquired by the communication unit.

3. The device management system (100) according to Claim 1, wherein
the communication unit communicates with the acquisition apparatus via the non-public line and transmits the first setting information stored in the information terminal to the acquisition apparatus, and
the acquisition apparatus
compares the first setting information received from the information terminal via the non-public line with the second setting information acquired from the one or more devices, and
transmits a result of comparison between the first setting information and the second setting information to the information terminal via the non-public line.

4. The device management system according to any one of Claims 1 to 3, further comprising a management apparatus (50) that is installed outside the property and that is connected to the acquisition apparatus via a public line (70) during operation of the one or more devices.

5. The device management system according to Claim 4, wherein
the management apparatus stores the first setting information, and
the information terminal further includes an acquisition unit (33) that acquires the first setting information from the management apparatus via the public line.

6. The device management system according to any one of Claims 1 to 4, wherein the information terminal further includes an acquisition unit (33) that acquires the first setting information from a storage medium (80) that stores the first setting information.

7. The device management system according to any one of Claims 1 to 6, wherein the information terminal further includes a change unit (34) that changes at least one of the first setting information and the second setting information, based on a result of comparison between the first setting information and the second setting information, in a case where the first setting information is different from the second setting information.

8. The device management system according to any one of Claims 1 to 7, wherein the first setting information and the second setting information each include at least address information of the one or more devices.

9. The device management system according to any one of Claims 1 to 8, wherein the non-public line is near field wireless communication, a local area network, Wi-Fi (registered trademark), or Bluetooth (registered trademark).

10. The device management system according to any one of Claims 1 to 9, wherein the one or more devices include at least one of an air conditioner, a ventilator, a humidity controller, and a refrigerator.

11. The device management system according to any one of Claims 1 to 10, wherein the information terminal further includes a presentation unit (35) that presents a result of comparison between the first setting information and the second setting information.

12. The device management system according to Claim 11, wherein the presentation unit presents, for each of the one or more devices, information about a difference between the first setting information and the second setting information.
